(19) Europäisches Patentamt / European Patent Office / Office européen des brevets

(11) **EP 4 606 630 A1**

(12) **EUROPEAN PATENT APPLICATION**

(43) Date of publication:
**27.08.2025 Bulletin 2025/35**

(21) Application number: **24219404.1**

(22) Date of filing: **12.12.2024**

(51) International Patent Classification (IPC):
**B60L 53/12** (2019.01)  **H01F 38/14** (2006.01)
**H02J 50/10** (2016.01)

(52) Cooperative Patent Classification (CPC):
**B60L 53/12; H01F 38/14; H02J 50/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2024  KR 20240025033**

(71) Applicants:
• **Hyundai Motor Company**
  **Seoul 06797 (KR)**
• **Kia Corporation**
  **Seocho-gu,**
  **Seoul 06797 (KR)**

• **Seoul National University R&DB Foundation**
  **Seoul 08826 (KR)**

(72) Inventors:
• **CHOE, Gyu Yeong**
  **18280 Hwaseong-si, Gyeonggi-do (KR)**
• **HA, Jung Ik**
  **08826 Seoul (KR)**
• **CHOI, Sung Hyuk**
  **08837 Seoul (KR)**

(74) Representative: **Viering, Jentschura & Partner
mbB
Patent- und Rechtsanwälte
Am Brauhaus 8
01099 Dresden (DE)**

(54) **POWER TRANSMISSION DEVICE, POWER RECEPTION DEVICE, AND WIRELESS POWER TRANSFER SYSTEM AND METHOD FOR ELECTRIC VEHICLE CHARGING**

(57) A power reception device is disposed in an electric vehicle to receive electric power from an electric vehicle supply equipment (EVSE). The power reception device includes: a first magnetic core portion being a part of a magnetic core and corresponding to a core of a primary coil in a power transmission device of the EVSE; a secondary coil wound around the first magnetic core portion; and a second magnetic core portion being another part of the magnetic core and extending from an end of the first magnetic core portion.

**FIG. 2**

**Description**

CROSS-REFERENCE TO RELATED APPLICATION

The present application claims under 35 U.S.C. § 119(a) the benefit of Korean Patent Application No. 10-2024-0025033 filed on February 21, 2024, the entire contents of which are incorporated herein by reference.

BACKGROUND

**1. Technical Field**

The present disclosure relates to a power transmission device and power transfer system and method for wireless power transfer, more particularly, to the power transfer system designed such that an inductive coupling between two coils wound around respective magnetic cores is robust to a misalignment or position variations in any direction.

**2. Description of the Related Art**

An electric vehicle (EV) is driven by an electric motor using power stored in a battery, and produces less pollution such as exhaust gas and noise compared with a conventional gasoline engine vehicle, and has advantages of fewer faults, a longer life span, and simplified driving operations.

EVs may be classified into hybrid electric vehicles (HEVs), plug-in hybrid electric vehicles (PHEVs), and electric vehicles (EVs) based on a driving power source. The HEV has an engine as a main power source and a motor as an auxiliary power source. The PHEV has a motor and a battery as a main power source and an engine that is used when the battery is discharged. The EV has a motor but does not have an engine.

A wireless power transfer (WPT) system for electric vehicles may include a power transmission unit including a transmission pad and installed outside the electric vehicle, i.e., in the charging station, and a power reception unit including a reception pad and installed inside the electric vehicle.

The power transmission unit converts electric energy from a power grid into a highfrequency alternating current by a switching device and provides the alternating current to the electric vehicle through the transmission pad.

A voltage is induced in the reception pad by a time-varying magnetic field generated by the transmission pad. A power conversion circuit in the power reception unit converts the alternating current transferred to the power reception unit through the reception pad into a direct current voltage and charges a high-voltage battery mounted in the electric vehicle.

A magnitude of a transferred power and an efficiency of the wireless power transfer may vary depending on an alignment between the transmission pad and the reception pad.

SUMMARY

An exemplary embodiment of the present disclosure provides a core structure of a power transfer device in an electric vehicle wireless power transfer system designed to have robust characteristics against variations in an inductive coupling between a primary coil and a secondary coil caused by a misalignment or positional variations of a transmission pad or a reception pad.

An exemplary embodiment of the present disclosure provides an electric vehicle wireless power transfer system designed to have robust characteristics against a misalignment of the primary coil and the secondary coil or positional variations of the transmission pad or the reception pad.

An exemplary embodiment of the present disclosure provides a vertical type resonance pad structure capable of maintaining a uniform performance by providing a magnetic path that is robust to variations in air gaps even when a distance between the ground and the reception pad varies depending on a height of the electric vehicle or a condition of ground surface.

An exemplary embodiment of the present disclosure provides a vertical type resonance pad structure capable of maintaining a uniform performance by providing a magnetic path that is robust to a misalignment or positional variations of the transmission pad or the reception pad not only when misalignment occurs in the vertical direction, e.g., in a Z-axis direction, but also when the misalignment occurs in the horizontal direction, e.g., in a Y-axis direction.

An exemplary embodiment of the present disclosure provides a vertical type resonance pad that is robust to the misalignment of the primary coil and the secondary coil or the positional variations of the transmission pad or the reception pad in consideration of a shape of the electric vehicle and a position of a power reception device.

An exemplary embodiment of the present disclosure provides a method of designing a pole area required for a uniform power transfer through a magnetic circuit analysis.

According to an aspect of an exemplary embodiment, a power reception device is disposed in an electric vehicle to receive electric power from an electric vehicle supply equipment (EVSE), the power reception device may include: a first magnetic core device being a part of a magnetic core and corresponding to a core of a primary coil in a power transmission device of the EVSE; a secondary coil wound around the first magnetic core device; and a second magnetic core device being another part of the magnetic core and extending from an end of the first magnetic core device.

According to a further aspect of the exemplary embodiment, a power reception device disposed in an electric vehicle to receive electric power from an electric vehicle supply equipment (EVSE) includes: a first magnetic core section being a part of a magnetic core device, elongated in a first axis direction, and corresponding to a core of a primary coil in a power transmission device of the EVSE; a secondary coil wound around the first magnetic core section; and a second magnetic core section being another part of the magnetic core device and extending from an end of the first magnetic core section.

The second magnetic core section may extend toward the core of the primary coil in a state that the power reception device is aligned to the power transmission device to receive the electric power from the EVSE.

The second magnetic core section may extend in a direction of a second axis perpendicular to the first axis.

A length of the second magnetic core section may be determined based on a magnetic property of the second magnetic core section.

When the magnetic core device is disposed at a particular position in the electric vehicle, the length of the second magnetic core section may be determined based on an exterior shape of the electric vehicle at the particular position of the electric vehicle.

The power reception device may further include a third magnetic core section being another part of the magnetic core device, coupled to a second end of the second magnetic core section having a first end coupled to the first magnetic core section, and elongated in a direction of a third axis perpendicular to the first axis and the second axis.

According to an embodiment of the present disclosure, the second magnetic core section may extend in the first axis direction such that the magnetic core device is longer than a portion of the core of the primary coil corresponding to the first magnetic core section in a state that the power reception device is aligned to the power transmission device to receive the electric power from the EVSE.

The magnetic core device may be mounted on the electric vehicle with an intervention of a driving unit to be rotatable about a rotation axis set by the driving unit.

An electric vehicle may include the power reception device.

According to an aspect of an exemplary embodiment, a power transmission device disposed in an electric vehicle supply equipment (EVSE) capable of supplying electric power to an electric vehicle may include: a first magnetic core device being a part of a magnetic core and corresponding to a core of a secondary coil in a power reception device of the electric vehicle; a primary coil wound around the first magnetic core device; and a second magnetic core device being another part of the magnetic core and extending from at least one end of the first magnetic core device.

According to a further aspect of the exemplary embodiment, a power transmission device disposed in an electric vehicle supply equipment (EVSE) capable of supplying electric power to an electric vehicle includes: a first magnetic core section being a part of a magnetic core device, elongated in a first axis direction, and corresponding to a core of a secondary coil in a power reception device of the electric vehicle; a primary coil wound around the first magnetic core section; and a second magnetic core section being another part of the magnetic core device and extending from at least one end of the first magnetic core section.

The second magnetic core section may extend toward the core of the secondary coil in a state that the power transmission device is aligned with the power reception device to supply the electric power to the electric vehicle.

The second magnetic core section may extend in a direction of a second axis perpendicular to the first axis.

A length of the second magnetic core section may be determined based on a magnetic property of the second magnetic core section.

The power transmission device may further include a third magnetic core section being another part of the magnetic core device, coupled to a second end of the second magnetic core section having a first end coupled to the first magnetic core section, and elongated in a direction of a third axis perpendicular to the first axis and the second axis.

The second magnetic core section may be provided at both ends of the first magnetic core section.

The first magnetic core section may have a length in the first axis direction that is smaller than a length of the core of the secondary coil corresponding to the first magnetic core section in a state that the power transmission device is aligned with the power reception device to supply the electric power to the electric vehicle.

According to an aspect of an exemplary embodiment, a power transfer system includes a power transmission device of an electric vehicle supply equipment (EVSE) supplying electric power to an electric vehicle and a power reception device of the electric vehicle. The power transmission device includes: a first primary core section being a part of a primary core device and elongated in a first axis direction in a state that the power transmission device is aligned with the power reception device to supply the electric power to the electric vehicle; a primary coil wound around the first primary core section; and a second primary core section being another part of the primary core device and extending from at least one end of the first primary core section. The power reception device includes: a first secondary core section being a part of a secondary core device and elongated in the first axis direction in a state that the power reception device is aligned to the power transmission device to receive the electric power from the EVSE; a secondary coil wound around the first secondary core section; and a second secondary core section being another part of the secondary core device and extending from an end of the first secondary core section.

The second primary core section may extend in a direction of a second axis perpendicular to the first axis and toward the secondary core device at a first position of the first primary core section extending in the first axis direction. The second secondary core section may extend in a direction opposite to the second axis perpendicular to the first axis and toward the primary core device at a second position of the first secondary core section extending in the first axis direction toward the primary core device. The second position may be opposite to the first position across the primary coil and the secondary coil.

The power transmission device may further include a third primary core section being another part of the primary core device, coupled to a second end of the second primary core section having a first end coupled to the first primary core section, and elongated in a direction of a third axis perpendicular to the first axis and the second axis. The power reception device may further include a third secondary core section being another part of the secondary core device, coupled to a second end of the second secondary core section having a first end coupled to the first secondary core section, and elongated in a direction of the third axis.

The second primary core section may extend in a direction of a second axis perpendicular to the first axis from a first end position and a second end position of the first primary core section toward the secondary core device. The second secondary core section may extend in the first axis direction from an end of the first secondary core section.

According to an embodiment of the present disclosure, a length of the primary core device in the first axis direction may be smaller/shorter than a length of the secondary core device in the first axis direction.

According to an exemplary embodiment, it is possible to implement a core structure of a power transfer device in an electric vehicle wireless power transfer system designed to have robust characteristics against variations in an inductive coupling between a primary coil and a secondary coil caused by a misalignment or positional variations of a transmission pad or a reception pad.

According to an exemplary embodiment, it is possible to implement an electric vehicle wireless power transfer system designed to have robust characteristics against a misalignment of the primary coil and the secondary coil or positional variations of the transmission pad or the reception pad.

According to an exemplary embodiment, it is possible to implement a vertical resonance pad structure capable of maintaining a uniform performance by providing a magnetic path that is robust to variations in air gaps even when a distance between the ground and the reception pad varies depending on a height of the electric vehicle or a condition of ground surface.

According to an exemplary embodiment, it is possible to implement a vertical resonance pad structure capable of maintaining a uniform performance by providing a magnetic path that is robust to a misalignment or positional variations of the transmission pad or the reception pad not only when misalignment occurs in the vertical direction, e.g., in a Z-axis direction, but also when the misalignment occurs in the horizontal direction, e.g., in a Y-axis direction.

According to an exemplary embodiment, it is possible to implement a vertical resonance pad that is robust to the misalignment of the primary coil and the secondary coil or the positional variations of the transmission pad or the reception pad in consideration of a shape of the electric vehicle and a position of a power reception device.

According to an exemplary embodiment, it is possible to implement a method of designing a pole area required for a uniform power transfer through a magnetic circuit analysis.

## BRIEF DESCRIPTION OF THE DRAWINGS

In order that the disclosure may be well understood, there will now be described various forms thereof, given by way of example, reference being made to the accompanying drawings, in which:

> FIG. 1 is a conceptual diagram illustrating an example of a wireless power transfer system;
> FIGS. 2 to 5 illustrate exemplary embodiments of autoconnect charging devices (ACDs) for the wireless power transfer;
> FIGS. 6 and 7 illustrate a Cartesian coordinate system compatible with a definition in SAE J2954 standard and applicable to an embodiment of the present disclosure;
> FIG. 8 is a block diagram of a power transfer system and device using inductive coupling according to an exemplary embodiment of the present disclosure;
> FIG. 9 is a perspective view of a primary core of a power transmission pad device and a secondary core of a power reception pad device according to an exemplary embodiment of the present disclosure;
> FIG. 10 is a perspective view of the primary core of the power transmission pad device and the secondary core of the power reception pad device according to another exemplary embodiment of the present disclosure;
> FIG. 11 is a perspective view of the primary core of the power transmission pad device and the secondary core of the power reception pad device according to yet another exemplary embodiment of the present disclosure;
> FIG. 12 is a perspective view of the primary core of the power transmission pad device and the secondary core of the power reception pad device according to still yet another exemplary embodiment of the present disclosure;
> FIG. 13 illustrates a magnetic circuit in the exemplary embodiment shown in FIG. 9 for explaining operational characteristics of the magnetic circuit robust to positional variations;

FIG. 14 illustrates a magnetic circuit in the exemplary embodiment shown in FIG. 11 for explaining operational characteristics of the magnetic circuit robust to positional variations;

FIG. 15 is an illustration for explaining inductive coupling characteristics of the power transfer system shown in FIG. 10 exhibiting robustness to positional variations;

FIG. 16 is an illustration for explaining inductive coupling characteristics of the power transfer system shown in FIG. 12 exhibiting robustness to positional variations;

FIG. 17 is a conceptual diagram of an exemplary installation of the power reception pad device, where the power reception pad device of the embodiment of FIG. 9 is disposed inside a rear portion of the electric vehicle;

FIG. 18 is a conceptual diagram of another exemplary installation of the power reception pad device, where the power reception pad device of the embodiment of FIG. 11 is disposed inside the rear portion of the electric vehicle;

FIG. 19 is a conceptual diagram of another exemplary installation of the power reception pad device, where the power reception pad device of the embodiment of FIG. 9 is disposed inside a front portion of the electric vehicle;

FIG. 20 is a conceptual diagram of another exemplary installation of the power reception pad device, where the power reception pad device of the embodiment of FIG. 11 is disposed inside the front portion of the electric vehicle;

FIG. 21 is a conceptual diagram of an embodiment of the power transfer system in which the primary core and secondary core shown in FIG. 9 are arranged with an intervention of a driving unit;

FIG. 22 is a conceptual diagram of an embodiment of the power transfer system shown in FIG. 21 installed outside a rear portion of an electric vehicle;

FIG. 23 is a conceptual diagram of an embodiment of the power transfer system in which the primary core and secondary core shown in FIG. 11 are arranged outside a rear portion of an electric vehicle with an intervention of the driving unit;

FIG. 24 is a conceptual diagram of an embodiment of the power transfer system shown in FIG. 21 installed outside a rear portion of an electric vehicle;

FIG. 25 is a conceptual diagram of an embodiment of the power transfer system in which the primary core and secondary core shown in FIG. 11 are arranged outside a rear portion of an electric vehicle with an intervention of the driving unit;

FIGS. 26A and 26B illustrate magnetic flux distributions in the power transfer systems shown in FIGS. 9 and 11, respectively, for analyses of magnetic circuits formed in the power transmission pad device and the power reception pad device;

FIG. 27 is a circuit diagram of a magnetic equivalent circuit formed in the power transmission pad device and/or the power reception pad device shown in FIG. 26A and/or 26B;

FIG. 28 is a flowchart showing a process of designing the transmission pad and the reception pad according to an exemplary embodiment in consideration of a maximum transmitted power;

FIG. 29 is a flowchart showing a process of designing the transmission pad and the reception pad according to another exemplary embodiment in consideration of a maximum transmitted power;

FIG. 30 is a flowchart showing a power transfer method operable in the power transfer system including the power transmission pad device and the power reception pad device according to an exemplary embodiment of the present disclosure; and

FIG. 31 is a block diagram illustrating a general configuration of the wireless power transmission pad device, the wireless power reception pad device, the wireless power transfer (WPT) system, or a computing system for controlling them according to an embodiment of the present disclosure.

The drawings described herein are for illustration purposes only and are not intended to limit the scope of the present disclosure in any way.

## DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

For a clearer understanding of the features and advantages of the present disclosure, exemplary embodiments of the present disclosure will be described in detail with reference to the accompanied drawings. However, it should be understood that the present disclosure may be not be limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" or another identifiers such as "A" and "B" may be used to discriminate a component from the other ones but may not be intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies may be used herein for the purpose of describing particular exemplary embodiments only and may not be intended to limit the present disclosure. The singular forms include plural referents as well unless the context clearly dictates otherwise. Also, the expressions "comprises" or "includes" may be used to refer a presence of a combination of stated features, numbers, processing steps, operations, elements, or components, but may not be intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a ground assembly (GA) and a vehicle assembly (VA).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by an inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a GA coil, and the other one of the two coils may refer to a VA coil.

"Ground assembly (GA)": An assembly disposed on the ground or in an infrastructure side including the GA coil and other components. The other components may include at least one part to control the impedance and resonant frequency, a ferrite enforcing the magnetic path, and electromagnetic shielding materials. For example, the GA may include a power/frequency conversion unit and a GA controller necessary to function as a power source of a wireless power charging system, a wiring from the grid, and wirings between each unit, filtering circuits, and a housing.

"Vehicle assembly (VA)": An assembly mounted on the vehicle including the VA coil and other components. The other components may include at least one part to control the impedance and resonant frequency, a ferrite enforcing the magnetic path, and electromagnetic shielding materials. For example, the VA may include a power/frequency conversion unit and a VA controller necessary to as the vehicle part of a wireless power charging system, wiring to the vehicle batteries, and wirings between each unit, filtering circuits, and a housing.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. The primary device may be an apparatus external to the EV. The primary device may be referred to as a first side device. When the EV is receiving power, the primary device may operate as the source of the power to be transferred. The primary device may include the housing and all covers.

"Secondary device": An apparatus mounted on the EV providing the contactless coupling to the primary device. The secondary device may be provided within the EV. The secondary device may be referred to as a secondary side device. When the EV is receiving power, the secondary device may transfer the power from the primary device to the EV. The secondary device may include the housing and all covers.

"Ground Assembly controller (GA controller)" indicates a portion of the GA regulating an output power level of the GA coil based on information from the vehicle. "Vehicle Assembly controller (VA controller)" indicates a portion of the VA monitoring specific on-vehicle parameters during the charging and initiating communications with the GA to facilitate the adjustment of the output power level.

The GA controller may be used to refer to or a primary device communication controller (PDCC), and the VA controller may be used to refer to an electric vehicle communication controller (EVCC).

"Magnetic gap": A vertical distance between a highest plane of top portion of the litz wire or the top portion of the magnetic material in the GA coil a lowest plane of lower portion of the litz wire or the lowest portion of the magnetic material in the VA coil when they are aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted on the vehicle to the ground surface.

"VA coil magnetic surface distance": A distance between a plane of a nearest magnetic or conducting component surface to a lower external surface of the VA coil when mounted. Such a distance may include any protective coverings and additional items which may be packaged in the VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the VA controller with the GA controller of the charging spot.

The correlation or association process may include a process of establishing a relationship between two peer communication entities.

"Command and control communications": Communications for exchanging information required for starting, controlling, and ending the wireless power transfer process between an electric vehicle power supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity. On the other hand, some of the description of the conventional components may be replaced by a citation of related prior documents.

Some of the description in the prior documents may be related to the problems to be solved by the present disclosure, but some of the solutions of the present disclosure may also be related with the prior documents.

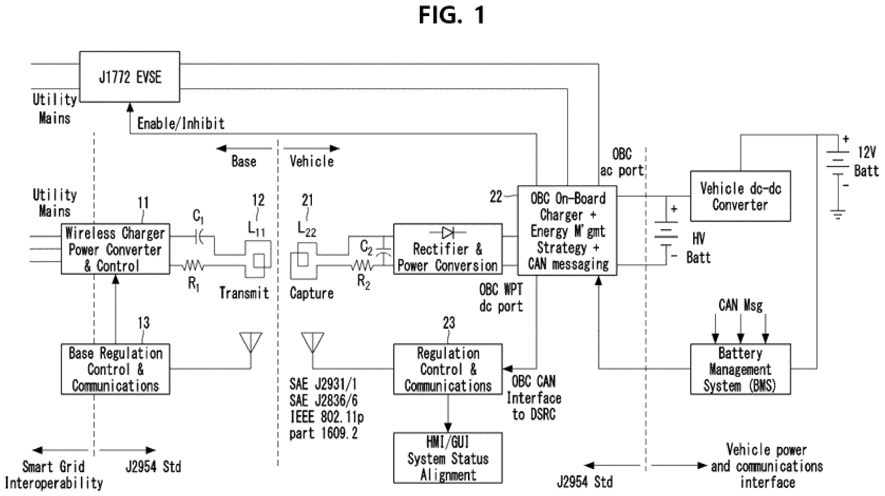

In the following description provided with reference to FIGS. 1-31, technical features that may have been conventional may be omitted or replaced by the citation of related prior documents in order not to obscure the point.

Also, some or all of the description in the prior documents cited above or cited below may be related to the problems to be solved by the present disclosure, and some of the solutions employed in the present disclosure may be adopted from the prior documents.

Some of the technical features disclosed in prior documents and adopted to implement the present disclosure may be considered as part of the configuration of the present disclosure.

Exemplary embodiments of the present disclosure will now be described in detail with reference to the accompanying drawings.

FIG. 1 is a conceptual diagram illustrating an example of a wireless power transfer system.

As shown in FIG. 1, an electric vehicle (EV) charging system may include a conductive charging system using a cable or a non-contact wireless power transfer (WPT) system, but is not limited thereto. The EV charging system may be basically defined as a system providing the EV with the electric power from a commercial power grid or an energy storage device so that the EV charges a battery mounted in the EV. The EV charging system may have various forms depending on the type of the EV.

SAE TIR J2954 standard which is one of the most representative industrial standards for wireless charging specifies industry-standard specification guidelines that define acceptable criteria for interoperability, electromagnetic compatibility, minimum performance, safety, and testing for the wireless charging of light-duty electric and plug-in hybrid electric vehicles.

Referring to FIG. 1 illustrating an example of the wireless charging system, the wireless charging system (WCS) according to the J2954 standard may include a grid interface, a high frequency power inverter, power transfer coils, a filter, a rectifier, an optional regulator, and communication circuits for the communications between the vehicle energy charging/storage system and a grid connected power inverter. The grid interface may be similar to a conventional EVSE connection for single or three-phase AC power.

The wireless charging system for electric vehicles may include following three major portions:

(1) a grid-connected converter 11 with a GA coil 12 for power coupling, with a communication link 13 to the vehicle system;
(2) a vehicle-mounted VA coil 21 with rectification and filtering components, and charging control power electronics 22 for regulation, safety, and/or shutdown when required, and a communications link 23 to the infrastructure side; and
(3) a secondary energy storage system 31, battery management system components 32, and associated modules for in-vehicle communications (e.g., CAN and LIN) required for a battery state of charge (SOC), a charge rate, and other necessary information.

Generally, the electric vehicle visiting the charging station performs the charging of its battery by establishing a wireless communication link such as a Wireless LAN (WLAN) link according to 802.11n protocol with a charger.

The wireless power transfer system of FIG. 1 may use an inductive coupling. In particular, the power transfer system according to an embodiment of the present disclosure may be deployed in an environment in which a gap between a transmission pad and a reception pad is controlled to be within a certain range so that the power transfer is fulfilled efficiently by the inductive coupling. The wireless power transfer system may include all the configurations shown in FIG. in their entireties or may include some of the configurations selected as needed or a configuration appropriately modified within the spirit and scope of the present disclosure.

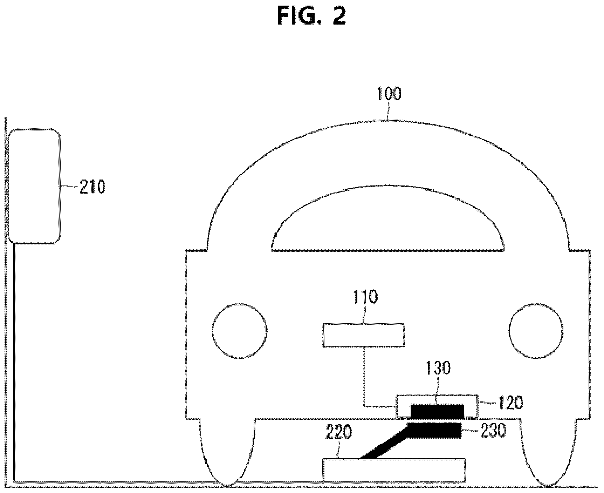

FIGS. 2-5 illustrate embodiments of autoconnect charging devices (ACDs) for the power transfer.

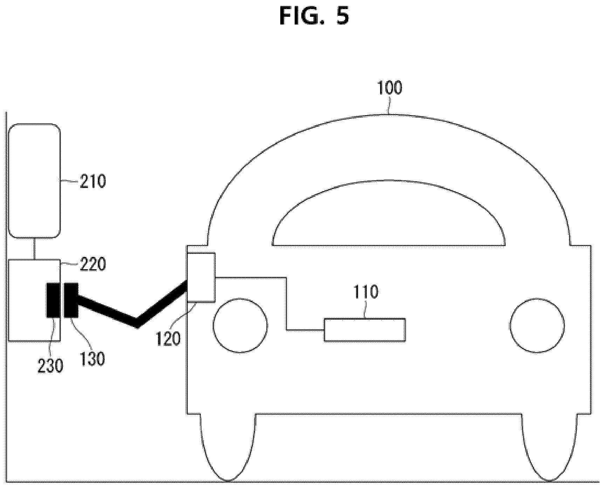

An international standard ISO 15118-8 directed for wireless communication interface for electric vehicle charging enables an EV to connect to a charger access point (AP) rather than a general AP through a signaling in Vendor Specific Element (VSE) field of a medium access control (MAC) frame corresponding to a layer 2 of OSI 7 layers. However, information on positioning and pairing is not defined in detail in the VSE field of a charger or SECC except for the wireless power transfer (WPT). Thus, various positioning and communication schemes may be applicable for a precise positioning and pairing in a robot charging system based on the autoconnect charging device of a sidearm connection (ACD-S) type, for example, shown in FIG. 5.

An on-board vehicle power supply circuit mounted in the electric vehicle 100 may include a battery 110 as a load.

An autoconnect charging device vehicle unit (ACD-VU) 120 mounted in the electric vehicle 100 may receive electric power through a vehicle inlet 130 and deliver the electric power to the battery 110.

An electric vehicle charging station 210 may be provided as a part of an electric vehicle supply equipment (EVSE) supplying the electric power to the electric vehicle 100. The charging station 210 may be electrically coupled to an ACD station 220 and may transfer the electric power to the vehicle inlet 130 through a connector 230 of the ACD station 220.

The connector 230 may become close to be coupled to the vehicle inlet 130. In an exemplary embodiment of the present disclosure, the connector 230 and the vehicle inlet 130 may be controlled to become adjacent to each other so as to form the inductive coupling between them.

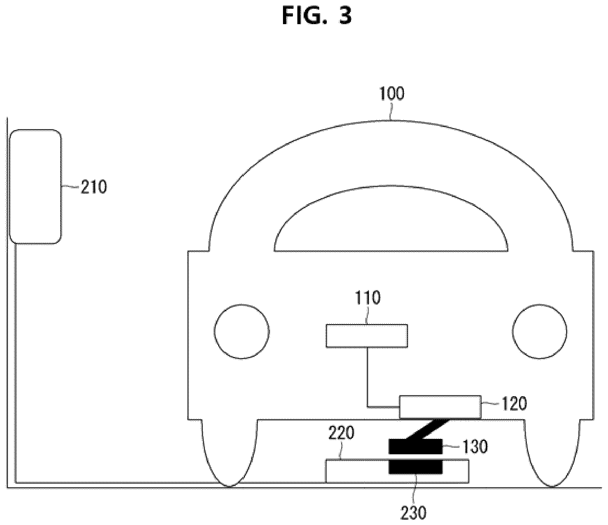

FIGS. 2 and 3 illustrate exemplary embodiments of the wireless power transfer using an autoconnect charging device of underbody connection (ACD-U) type. In the wireless power transfer system shown in the drawings, the ACD station 220 is located below the electric vehicle 100, and this structure of the autoconnect charging device may be collectively referred to as the ACD-U type.

In an exemplary embodiment, the connector 230 of the ACD station 220 may be controlled to extend from the ACD station 220 toward the vehicle inlet 130 as shown in FIG. 2. In this case, the connector 230 of the ACD station 220 may be coupled to and controlled by a robot arm.

In an alternative embodiment, the vehicle inlet 130 may be controlled to extend from the ACD-VU 120 toward the connector 230 of the ACD station 220 as shown in FIG. 3. In this case, the vehicle inlet 130 may be coupled to and controlled by a robot arm.

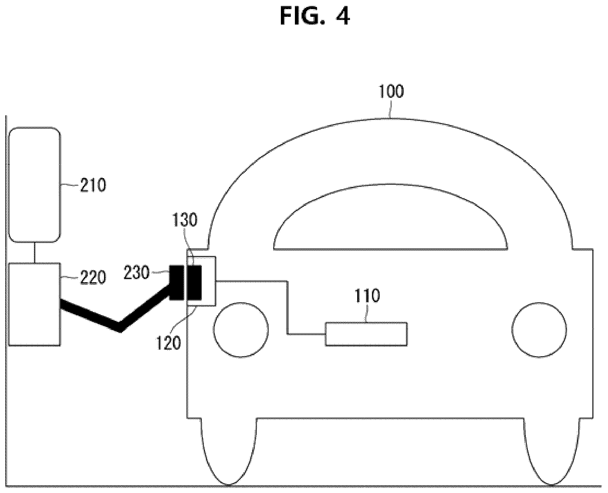

FIGS. 4 and 5 illustrate exemplary embodiments of the wireless power transfer using an autoconnect charging device of sidearm connection (ACD-S) type. In the wireless power transfer system shown in the drawings, the ACD station 220 is located to a side the electric vehicle 100, and this structure of the autoconnect charging device may be collectively referred to as the ACD-S type.

In an exemplary embodiment, the connector 230 of the ACD station 220 may be controlled to extend from the ACD station 220 toward the vehicle inlet 130 as shown in FIG. 4. In this case, the connector 230 of the ACD station 220 may be coupled to and controlled by a robot arm.

In an alternative embodiment, the vehicle inlet 130 may be controlled to extend from the ACD-VU 120 toward the connector 230 of the ACD station 220 as shown in FIG. 5. In this case, the vehicle inlet 130 may be coupled to and controlled by a robot arm.

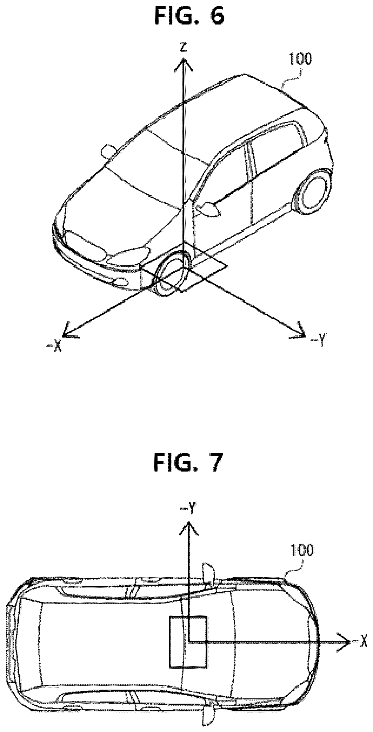

FIGS. 6 and 7 illustrate a Cartesian coordinate system compatible with a definition in the SAE J2954 standard and applicable to an embodiment of the present disclosure.

As shown in FIGS. 6 and 7, in the right-handed Cartesian coordinate system, +X axis may be set to point to the rear of the vehicle, and -X axis may be set to point to the front of the vehicle. +Y axis may be set to point to the right of the vehicle, i.e. to a passenger side of a left-hand drive car, and -Y axis may be set to point to the left of the vehicle in an exemplary embodiment. +Z axis may be set to point to the upward direction, and -Z axis may be set to point to the downward direction in an exemplary embodiment.

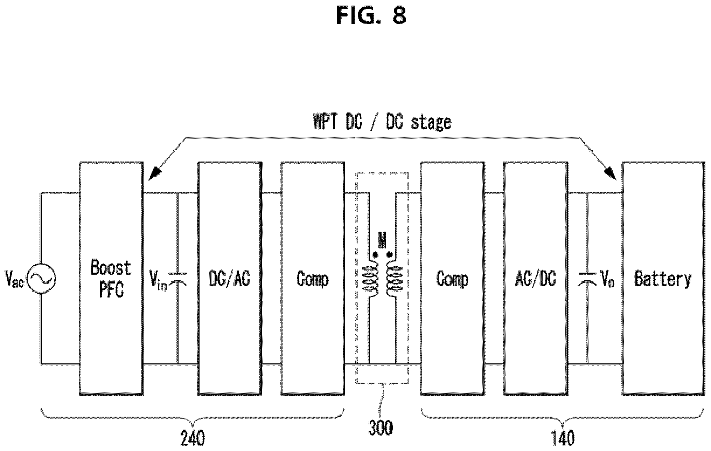

FIG. 8 is a block diagram of a power transfer system and device using inductive coupling according to an exemplary embodiment of the present disclosure.

Referring to FIG. 8, the power transfer system includes a primary-side circuit 240 disposed in the EVSE and a secondary-side circuit 250 mounted on the electric vehicle 100.

A primary magnetic core and a primary coil are disposed at the end of the primary-side circuit 240. A secondary magnetic core and a secondary coil are disposed before the secondary-side circuit 140.

A wireless power transfer system 300 in which the electric power is transferred wirelessly may be implemented by the primary magnetic core, the primary coil, the secondary magnetic core, and the secondary coil that form the inductive coupling.

The primary-side circuit 240 may include a DC-AC converter configured to convert direct current (DC) power to an alternating current (AC) power for inducing a magnetic field.

The primary-side circuit 240 and/or the secondary-side circuit 140 may include a compensation circuit configured to compensate for a leakage inductance caused by a large air gap.

The wireless power transfer system 300 may include a power transmission pad device on the primary side and a power reception pad device on the secondary side having a vertical core structure that is robust to a misalignment in a Z-axis direction.

The secondary-side circuit 140 may include an AC-DC converter or rectifier configured to convert an AC power to a DC power.

In the power transfer system 300 according to an exemplary embodiment of the present disclosure including a power transmission device in the EVSE supplying the electric power to the electric vehicle 100 and a power reception device on the electric vehicle 100, the power transmission device may include a first primary core portion (or core section, or core member) being a part of the primary core (or core device) and elongated in a first axis direction in a state of being aligned to the power reception device to supply the electric power from the EVSE to the electric vehicle 100, the primary coil wound around the first primary core portion, and a second primary core portion (or core section, or core member) being another part of the primary core (or core device) and extending from at least one side of the first primary core portion.

In the power transfer system 300 according to an exemplary embodiment of the present disclosure, the power reception device may include a first secondary core portion (or core section, or core member) being a part of the secondary core (or core device) and elongated in the first axis direction in a state of being aligned to the power transmission device to be supplied with the electric power from the EVSE, the secondary coil wound around the first secondary core portion, and a second secondary core portion (or core section, or core member) being another part of the secondary core (or core device) and protruding or extending from at least one side of the first secondary core portion.

During an alignment of the electric vehicle for the wireless power transfer, a misalignment in the Z-axis direction may occur due to at least one of various factors such as a height of the vehicle, a tire size, a tire pressure, and ground conditions. The misalignment in the Z-axis direction may also arise from seasonal factors, a temperature, weather, and so on.

An exemplary embodiment of the present disclosure may provide a core structure that may have robust magnetic coupling characteristics enough to enable a stable power transfer even when a wide range of misalignment exists.

An exemplary embodiment of the present disclosure may provide a core structure designed such that the primary core of the transmission pad device and the secondary core of the reception pad device have an asymmetric structure at the same position in the Z-axis position so as to show robust magnetic coupling characteristics enough to enable a stable power transfer even when a wide range of misalignment exists.

An exemplary embodiment of the present disclosure may provide a core structure that may show robust magnetic coupling characteristics enough to enable a stable power transfer even when a wide range of misalignment exists without increases in sizes and areas of the transmission pad device and the reception pad device.

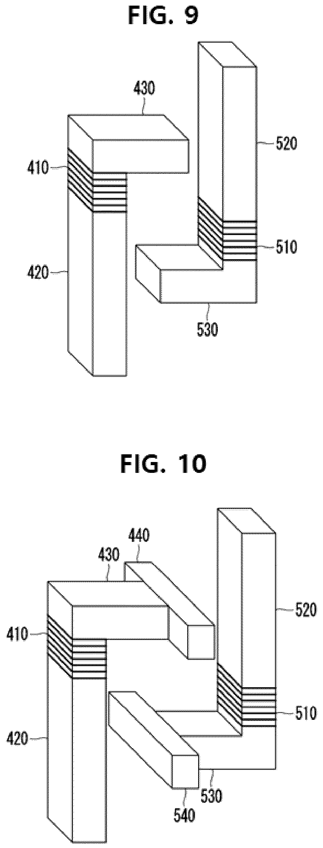

FIG. 9 is a perspective view of the primary core of the power transmission pad device and the secondary core of the power reception pad device according to an exemplary embodiment of the present disclosure.

Referring to FIG. 9, in the power transfer system 300 according to an exemplary embodiment of the present disclosure including a power transmission device in the EVSE supplying the electric power to the electric vehicle 100 and a power reception device on the electric vehicle 100, the power transmission device may include a first primary core portion (or core section, or core member) 420 being a part of the primary core (or core device) and elongated in a first axis direction in a state that the power transmission device is aligned to the power reception device to supply the electric power from the EVSE to the electric vehicle 100, a primary coil 410 wound around the first primary core portion 420, and a second primary core portion (or core section, or core member) 430 being another part of the primary core (or core device) and extending from at least one side of the first primary core portion 420.

In the power transfer system 300 according to an exemplary embodiment of the present disclosure, the power reception device may include a first secondary core portion (or core section, or core member) 520 being a part of the secondary core (or core device) and elongated in the first axis direction in a state that the power reception device is aligned to the power transmission device to be supplied with the electric power from the EVSE, a secondary coil 510 wound around the first secondary core portion 520, and a second secondary core portion (or core section, or core member) 530 being another part of the secondary core (or core device) and extending from at least one side of the first secondary core portion 520.

In a state that the power transmission pad device and the power reception pad device are aligned or roughly aligned, the Z-axis may be expressed as a first axis, and the +X and -X axes may be expressed as a second axis and a direction opposite to the second axis, respectively, for convenience of explanation. In addition, the +Y and -Y axes may be expressed as a third axis and a direction opposite to the third axis, respectively.

The second primary core portion 430 may extend in a direction of the second axis perpendicular to the first axis and toward the secondary core from a side facing the secondary core at a first position of the first primary core portion 420 extending in the first axis direction. The second primary core portion 430 may extend toward the first secondary core portion 520 of the secondary core.

The second secondary core portion 530 may extend in a direction opposite to the second axis and toward the primary core from a side facing the primary core at a second position of the first secondary core portion 520 extending in the first axis direction. The second secondary core portion 530 may extend toward the first primary core portion 420 of the primary core. The second position may be opposite to the first position across the primary coil 410 and/or the secondary coil 510.

For convenience of explanation, the structure of the primary core and/or the secondary core shown in FIG. 9 may be referred to as an L-type core structure.

The protruding lengths of the second primary core portion 430 and/or the second secondary core portion 530 may be determined based on magnetic properties of the second primary core portion 430 and/or the second secondary core portion 530.

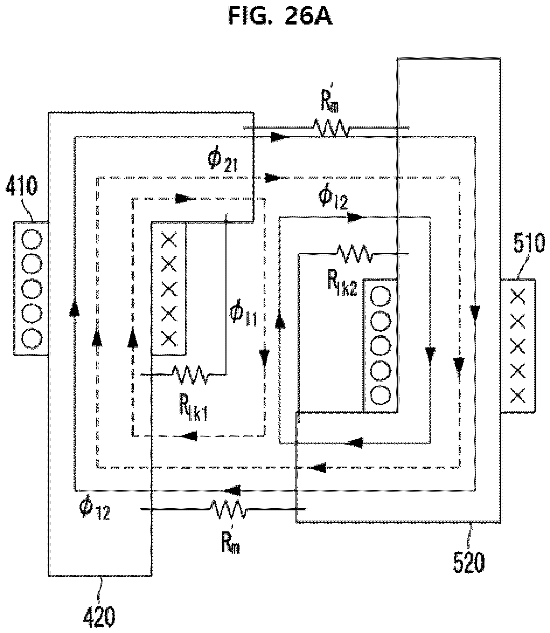

Determination and design of the protruding lengths, widths and thicknesses, structures, and/or shapes of the protrusions of the second primary core portion 430 and/or the second secondary core portion 530 will be described below in more detail with reference to FIGS. 26A, 26B, and 27-29.

In the exemplary embodiment shown in FIG. 9, as long as a gap between the second primary core portion 430 and the first secondary core portion 520 and a gap between the first primary core portion 420 and the second secondary core portion 530 are maintained within a certain range, the misalignment in the Z-axis direction does not significantly affect the distribution and path of magnetic flux in the magnetic circuit. Accordingly, it is possible to implement the power transmission pad device and the power reception pad device that are robust to positional variations and/or misalignment of the electric vehicle with the charging station.

FIG. 10 is a perspective view of the primary core of the power transmission pad device and the secondary core of the power reception pad device according to another exemplary embodiment of the present disclosure.

Duplicate descriptions of configurations in the embodiment of FIG. 10 similar to those in the embodiment of FIG. 9 will be omitted for simplicity.

Referring to FIG. 10, the power transmission device may further include a third primary core portion (or core section, or core member) 440 being another part of the primary core (or core device), coupled to the other end of the second primary core portion 430, and elongated in a direction of the third axis perpendicular to the first and the second axes.

The power reception device may further include a third secondary core portion (or core section, or core member) 540 being another part of the secondary core (or core device), coupled to the other end of the second secondary core portion 530, and elongated in the third axis direction.

The lengths of the third primary core portion 440 and/or the third secondary core portion 540 may be determined based on the magnetic properties of the third primary core portion 440 and/or the third secondary core portion 540.

The determination and design of the lengths, widths and thicknesses, structures, and/or shapes of the protrusions of the third primary core portion 440 and/or the third secondary core portion 540 will be described below in more detail with reference to FIGS. 26A, 26B, and 27-29.

In the exemplary embodiment shown in FIG. 10, as long as a gap between the third primary core portion 440 and the first secondary core portion 520 and a gap between the first primary core portion 420 and the third secondary core portion 540 are maintained within a certain range, the misalignment in the Z-axis or the Y-axis direction does not significantly affect the distribution and path of magnetic flux in the magnetic circuit. Accordingly, it is possible to implement the power transmission pad device and the power reception pad device that are robust to the positional variations and/or misalignment of the electric vehicle with the charging station.

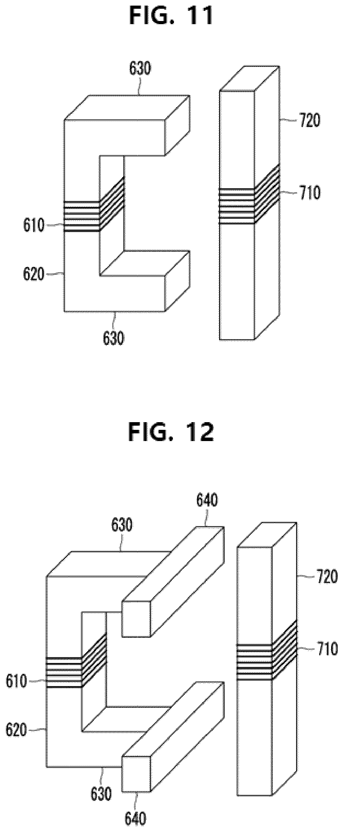

FIG. 11 is a perspective view of the primary core of the power transmission pad device and the secondary core of the power reception pad device according to yet another exemplary embodiment of the present disclosure.

Referring to FIG. 11, in the power transfer system 300 according to an exemplary embodiment of the present disclosure including a power transmission device in the EVSE supplying the electric power to the electric vehicle 100 and a power reception device on the electric vehicle 100, the power transmission device may include a first primary core portion 620 being a part of the primary core and elongated in a first axis direction in a state of being aligned to the power reception device to supply the electric power from the EVSE to the electric vehicle 100, the primary coil 610 wound around the first primary core portion 420, and second primary core portion s 630 being another parts of the primary core and extending from both ends of the first primary core portion 620 toward the power reception device.

In the power transfer system 300 according to an exemplary embodiment of the present disclosure, the power reception device may include a first secondary core portion (or core section, or core member) 720 being a part of the secondary core (or core device) and elongated in the first axis direction in a state of being aligned to the power transmission device to be supplied with the electric power from the EVSE, and a secondary coil 710 wound around the first secondary core portion 520.

In the exemplary embodiment shown in FIG. 11, a second secondary core portion that may be clearly discriminated from the first secondary core portion 720 may not be formed on the secondary side.

The second primary core portions 630 may extend in a direction of the second axis perpendicular to the first axis from an upper end and a lower end of the first primary core portion 620 toward the power reception device.

If a portion of the secondary core facing the first primary core portion 610 and corresponding to the length of the first primary core portion 610 is referred to as a first secondary core portion for convenience of explanation, a second secondary core portion which may be a remaining part of the secondary core may extend in the first axis direction from an end of the first secondary core portion.

The length of the primary core in the first axis direction may be smaller/shorter than the length of the secondary core in the first axis direction. That is, in a state that power reception device is aligned with the power transmission device to be supplied with the electric power from the EVSE, the second secondary core portion may be elongated in the first axis direction such that the length of the secondary core in the first axis direction (i.e. a sum of the lengths of the first secondary core portion and the second secondary core portion) is larger/longer than the first primary core portion which is a part of the primary core.

For convenience of explanation, the structure including the primary core and the secondary core shown in FIG. 11 may be referred to as an UI-type core structure.

The protruding lengths of the second primary core portions 630 in the upper and lower positions may be determined based on the magnetic property of the second primary core portion 630.

The determination and design of the protruding lengths, widths and thicknesses, structures, and/or shapes of the protrusions of the second primary core portions 630 will be described below in more detail with reference to FIGS. 26A, 26B, and 27-29.

In the exemplary embodiment shown in FIG. 11, the length of the secondary core may be longer/larger than the length of the first primary core portion 620 parallel with the secondary core. As long as the gaps between the second primary core portions 630 and the first secondary core portion 720 are maintained within a certain range, the misalignment in the Z-axis direction (i.e., the first axis direction) may not significantly affect the distribution and path of magnetic flux in the magnetic circuit according to the exemplary embodiment. Accordingly, it is possible to implement the power transmission pad device and the power reception pad device that are robust to the positional variations and/or misalignment of the electric vehicle with the charging station.

FIG. 12 is a perspective view of the primary core of the power transmission pad device and the secondary core of the power reception pad device according to still yet another exemplary embodiment of the present disclosure.

Duplicate descriptions of configurations in the embodiment of FIG. 12 similar to those in the embodiment of FIG. 11 will be omitted for simplicity.

The power transmission device may further include third primary core portions (or core sections, or core devices) 640 being other parts of the primary core (or core device), coupled to respective ends of the second primary core portion 630, and elongated in the direction of the third axis perpendicular to the first and the second axes.

The lengths of the third primary core portions 640 in the upper and lower positions may be determined based on the magnetic properties of the third primary core portions 640.

The determination and design of the lengths, widths and thicknesses, structures, and/or shapes of the third primary core portions 640 will be described below in more detail with reference to FIGS. 26A, 26B, and 27-29.

In the exemplary embodiment shown in FIG. 12, as long as the gaps between the third primary core portions 640 and the first secondary core portion 720 are maintained within a certain range, the misalignment in the Z-axis or the Y-axis direction does not significantly affect the distribution and path of magnetic flux in the magnetic circuit. Accordingly, it is possible to implement the power transmission pad device and the power reception pad device that are robust to the positional variations and/or misalignment of the electric vehicle with the charging station.

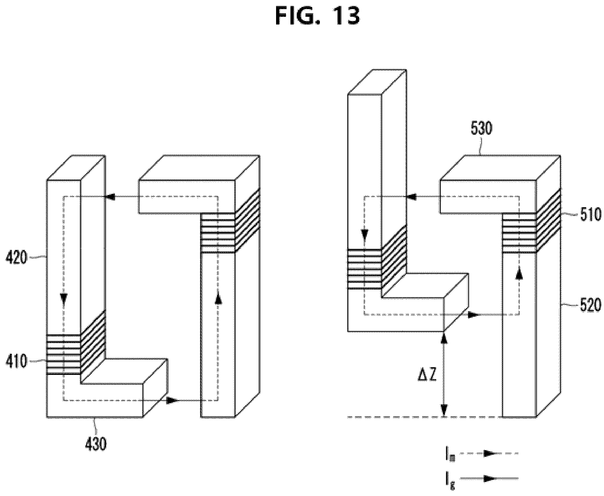

FIG. 13 illustrates the magnetic circuit in the exemplary embodiment of the L-type core structure shown in FIG. 9 for explaining operational characteristics of the magnetic circuit robust to the positional variations.

Among the magnetic flux paths, magnetic core sections $l_m$ passing through the magnetic cores and indicated by dashed line segments exhibit lower magnetic resistances while air gap sections $l_g$ passing through the air gaps and indicated by solid line segments exhibit higher magnetic resistances.

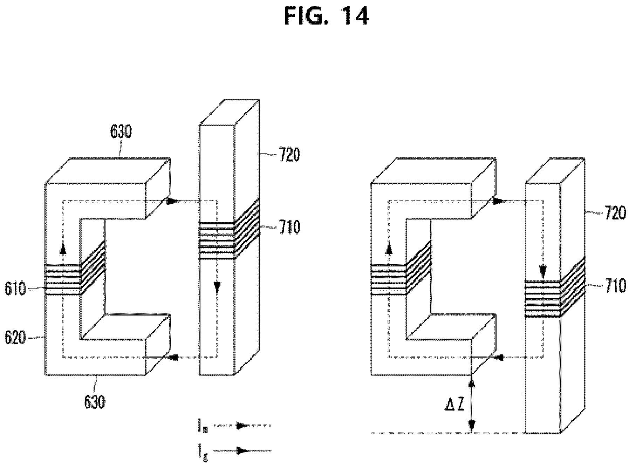

As a result, as long as a total length of the air gap sections $l_g$ is maintained within a certain range, an inductance in the exemplary embodiment of FIG. 14 may be maintained within a certain range without being significantly affected by the misalignment unless the total length of the air gap sections $l_g$ changes significantly even if an alignment error $\Delta Z$ in the Z-axis direction causes a change in the length of the magnetic core sections $l_m$.

FIG. 14 illustrates the magnetic circuit in the exemplary embodiment of the UI-type core structure shown in FIG. 11 for explaining the operational characteristics of the magnetic circuit robust to the positional variations.

Among the magnetic flux paths, the magnetic core sections $l_m$ passing through the magnetic cores and indicated by dashed line segments exhibit lower magnetic resistances while the air gap sections $l_g$ passing through the air gaps and indicated by solid line segments exhibit higher magnetic resistances.

As a result, as long as a total length of the air gap sections $l_g$ is maintained within a certain range, an inductance in the exemplary embodiment of FIG. 14 may be maintained within a certain range without being significantly affected by the misalignment unless the total length of the air gap sections $l_g$ changes significantly even if an alignment error $\Delta Z$ in the Z-axis direction causes a change in the length of the magnetic core sections $l_m$.

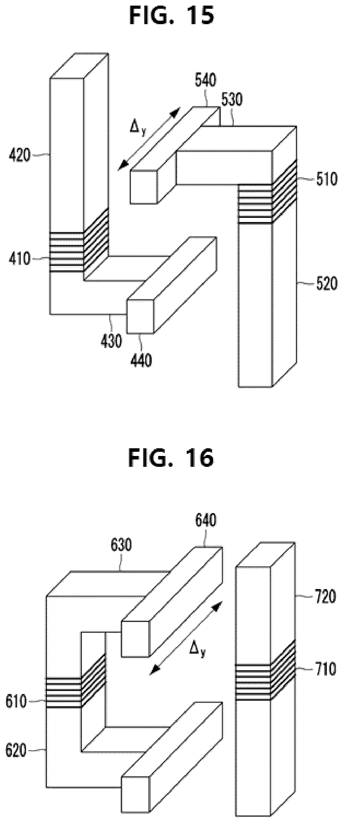

FIG. 15 is an illustration for explaining the operational characteristics of the power transfer system shown in FIG. 10 in which the L-type core structure is extended in the Y-axis direction to include the third primary core portion 440 and the third secondary core portion 540 so as to exhibit robust inductive coupling characteristics.

In the embodiment of FIG. 15, the L-type core structure enables to maintain the inductance of the power transfer system contributing to the inductive coupling regardless of the alignment error $\Delta Z$ in the Z-axis direction similarly to the embodiment of FIG. 13.

Further, the third primary core portion 440 and the third secondary core portion 540 extended in the Y-axis direction enable to maintain the inductance of the power transfer system contributing to the inductive coupling regardless of the alignment error $\Delta Y$ in the Y-axis direction.

FIG. 16 is an illustration for explaining the operational characteristics of the power transfer system shown in FIG. 12 in which the UI-type core structure is extended in the Y-axis direction to include the third primary core portions 640 in the upper and lower positions so as to exhibit robust inductive coupling characteristics.

In the embodiment of FIG. 16, the UI-type core structure enables to maintain the inductance of the power transfer system contributing to the inductive coupling regardless of the alignment error $\Delta Z$ in the Z-axis direction similarly to the embodiment of FIG. 14.

Further, the third primary core portions 640 extended in the Y-axis direction in the upper and lower positions enable to maintain the inductance of the power transfer system contributing to the inductive coupling regardless of the alignment error $\Delta Y$ in the Y-axis direction.

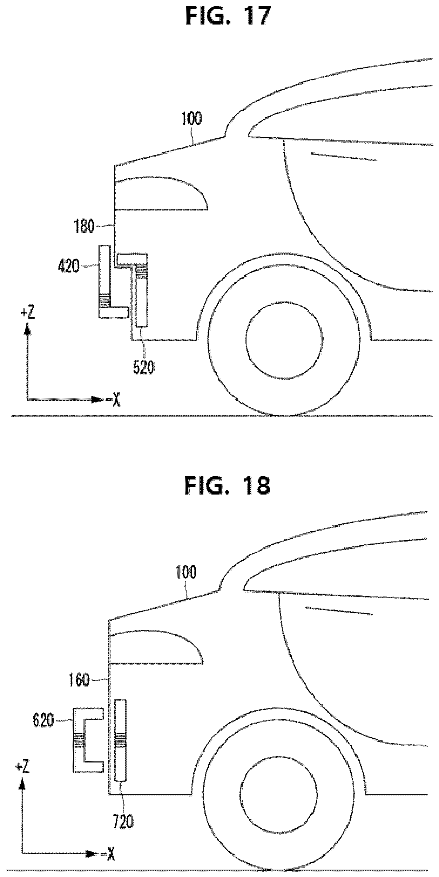

FIG. 17 is a conceptual diagram of an exemplary installation of the power reception pad device. In the example of FIG. 17, the power reception pad device according to the embodiment shown in FIG. 9 is disposed inside a rear portion of the electric vehicle.

That is, the power reception pad device of the vertical L-type core structure may be installed inside a panel 180 in the rear portion of the electric vehicle 100 or in an enclosure provided in the rear portion of the electric vehicle 100.

The shape and size of the primary and secondary cores in the vertical L-type core structure, e.g. the length of the first secondary core portion 520 elongated in the vertical direction and the length of the second secondary core portion extending in the horizontal direction may be determined based on a shape, thickness, protrusion (length along x-axis), and/or width of a space of the rear panel or enclosure 180 of the electric vehicle 100.

The shape and size of the primary and secondary cores in the vertical L-type core structure, e.g. the length of the first secondary core portion 520 elongated in the vertical direction and the length of the second secondary core portion extending in the horizontal direction may be determined such that the air gap to the first primary core portion 420 may be effectively reduced.

In FIG. 17, the rear enclosure 180 of the electric vehicle 100 may be formed to have a shape protruding backwards based on the shape and/or the size of the secondary core of the power reception pad device of the vertical L-type core structure.

Though it is shown in FIG. 17 that the power reception pad device according to the embodiment of FIG. 9 is disposed inside the rear portion of the electric vehicle, it should be noted that the power reception pad device according to the embodiment of FIG. 10 may also be disposed inside the rear portion of the electric vehicle 100 as well similarly to FIG. 17.

FIG. 18 is a conceptual diagram of an exemplary installation of the power reception pad device. In the example of FIG. 18, the power reception pad device according to the embodiment shown in FIG. 11 is disposed inside the rear portion of the electric vehicle.

That is, the power reception pad device of the vertical UI-type core structure may be installed inside the panel 160 in the rear portion of the electric vehicle 100 or in an enclosure provided in the rear portion of the electric vehicle 100.

The shape and size of the secondary core in the power reception pad device of the vertical UI-type core structure, the shape of the primary core in the power transmission pad device, and the length of the second primary core portions extending in the horizontal direction may be determined based on the shape, thickness, protrusion (length along x-axis), and/or width of a space of the rear panel or enclosure 160 of the electric vehicle 100.

The shape and size of the secondary core in the power reception pad device of the vertical UI-type core structure, the shape of the primary core in the power transmission pad device, and the length of the second primary core portions extending in the horizontal direction may be determined such that the air gap to the first secondary core portion 720 may be effectively reduced.

In FIG. 18, the rear enclosure 160 of the electric vehicle 100 may be formed to have a flat shape extending in the vertical direction.

Though it is shown in FIG. 18 that the power reception pad device according to the embodiment of FIG. 11 is disposed inside the rear portion of the electric vehicle, it should be noted that the power reception pad device according to the embodiment of FIG. 12 may also be disposed inside the rear portion of the electric vehicle 100 as well similarly to FIG. 18.

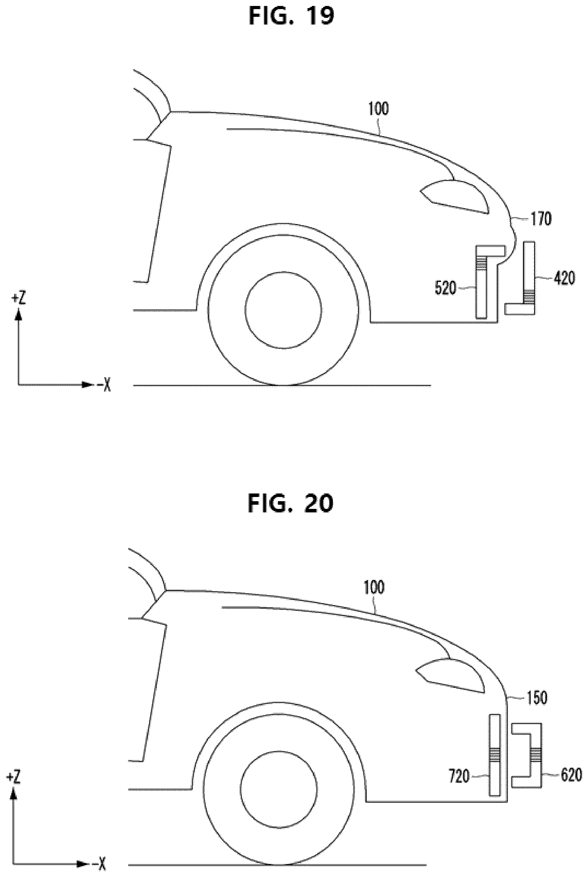

FIG. 19 is a conceptual diagram of an exemplary installation of the power reception pad device. In the example of FIG. 19, the power reception pad device according to the embodiment shown in FIG. 9 is disposed inside a front portion of the electric vehicle.

That is, the power reception pad device of the vertical L-type core structure may be installed inside a panel 170 in the front portion of the electric vehicle 100 or in an enclosure provided in the front portion of the electric vehicle 100.

The shape and size of the primary and secondary cores in the vertical L-type core structure, e.g. the length of the first secondary core portion 520 elongated in the vertical direction and the length of the second secondary core portion extending in the horizontal direction may be determined based on a shape, thickness, protrusion (length along x-axis), and/or width of a space of the front panel or enclosure 170 of the electric vehicle 100.

The shape and size of the primary and secondary cores in the vertical L-type core structure, e.g. the length of the first secondary core portion 520 elongated in the vertical direction and the length of the second secondary core portion extending in the horizontal direction may be determined such that the air gap to the first primary core portion 420 may be effectively reduced.

In FIG. 19, the rear enclosure 180 of the electric vehicle 100 may be formed to have a shape protruding forwards based on the shape and/or the size of the secondary core of the power reception pad device of the vertical L-type core structure.

Though it is shown in FIG. 19 that the power reception pad device according to the embodiment of FIG. 9 is disposed inside the front portion of the electric vehicle, it should be noted that the power reception pad device according to the embodiment of FIG. 10 may also be disposed inside the front portion of the electric vehicle 100 as well similarly to FIG. 19.

FIG. 20 is a conceptual diagram of an exemplary installation of the power reception pad device. In the example of FIG. 20, the power reception pad device according to the embodiment shown in FIG. 11 is disposed inside the front portion of the electric vehicle.

That is, the power reception pad device of the vertical UI-type core structure may be installed inside the panel 150 in the front portion of the electric vehicle 100 or in an enclosure provided in the front portion of the electric vehicle 100.

The shape and size of the secondary core in the power reception pad device of the vertical UI-type core structure, the shape of the primary core in the power transmission pad device, and the length of the second primary core portions extending in the horizontal direction may be determined based on the shape, thickness, protrusion (length along x-axis), and/or width of a space of the front panel or enclosure 150 of the electric vehicle 100.

The shape and size of the secondary core in the power reception pad device of the vertical UI-type core structure, the shape of the primary core in the power transmission pad device, and the length of the second primary core portions extending in the horizontal direction may be determined such that the air gap to the first secondary core portion 720 may be effectively reduced.

In FIG. 20, the rear enclosure 150 of the electric vehicle 100 may be formed to have a flat shape extending in the vertical direction.

Though it is shown in FIG. 20 that the power reception pad device according to the embodiment of FIG. 11 is disposed inside the front portion of the electric vehicle, it should be noted that the power reception pad device according to the embodiment of FIG. 12 may also be disposed inside the rear portion of the electric vehicle 100 as well similarly to FIG. 20.

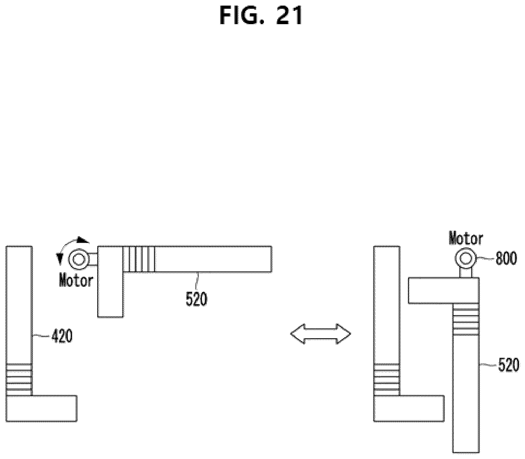

FIG. 21 is a conceptual diagram of an embodiment of the power transfer system in which the primary core and secondary core shown in FIG. 9 are arranged with an intervention of a driving unit including a rotatable hinge.

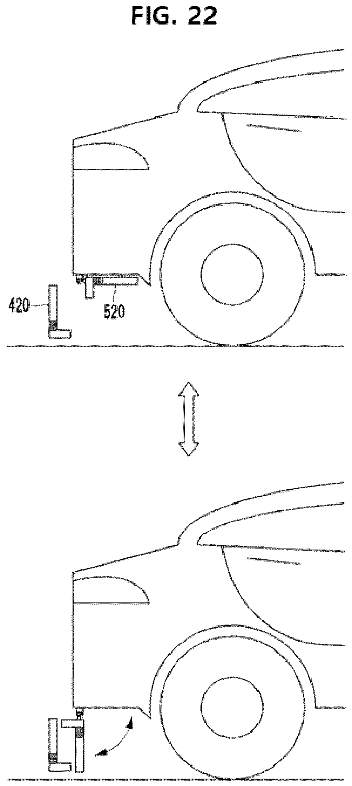

FIG. 22 is a conceptual diagram of an embodiment of the power transfer system shown in FIG. 21 installed outside a rear portion of the electric vehicle.

Referring to FIGS. 21 and 22, the first secondary core portion 520 may be mounted on the electric vehicle with the intervention of the driving unit 800 including a hinge that may be rotatable by an actuator.

In case that the power transfer system is not being used, e.g. when the vehicle is running, the first secondary core portion 520 may be retracted into a position extending in the horizontal direction according to a rotation of the hinge driven by the actuator.

When the electric vehicle is to be charged, the hinge may be rotated by the actuator so that the first secondary core portion 520 may be expanded into a position extending in the vertical direction. At this time, the first secondary core portion 520 may be aligned to the first primary core portion 420 of the power transmission pad device of the EVSE such that the air gaps between the primary core and the secondary core are reduced.

A motor may be used for the actuator as exemplarily indicated in FIGS. 21 and 22. However, the present disclosure is not limited thereto, and the hinge may be rotatable manually. Therefore, the hinge may be automatically rotated by the motor, may be rotated manually by a human, or may be rotated by a robot supporting a charging process. Referring to the Figs. 21 and 22, the secondary magnetic core of the power reception device may be mounted on the electric device with an intervention of the driving unit 800 at the end where the first secondary core portion 520 and the second secondary core portion 530 are connected. According to alternative embodiments of the present disclosure, the driving unit 800 may be intervened at the first secondary core portion 520 or the second secondary core portion 530, the intervened position may not be limited to any specified position on the secondary magnetic core.

Although the L-type core structure of FIG. 9 is shown in FIGS. 21 and 22, it will be apparent to those skilled in the art that the core according to the embodiment of FIG. 10 may be modified and mounted on the electric vehicle similarly to the embodiments of FIGS. 21 and 22.

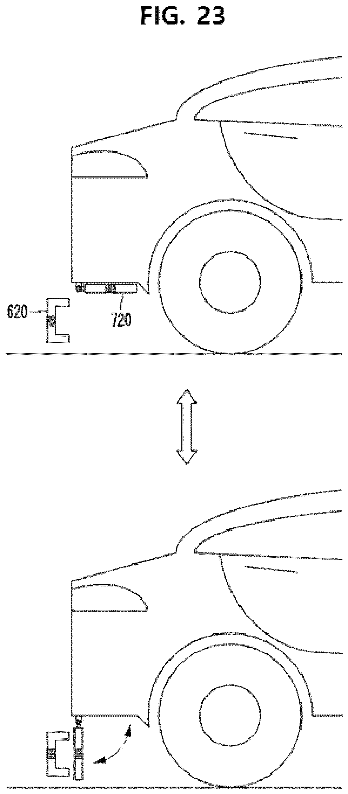

FIG. 23 is a conceptual diagram of an embodiment of the power transfer system in which the primary core and secondary core shown in FIG. 11 are arranged outside a rear portion of an electric vehicle with an intervention of the driving unit 800 including the hinge that may be rotatable by the actuator.

Referring to FIG. 23, the first secondary core portion 720 may be mounted on the electric vehicle with the intervention of the driving unit 800 including the hinge driven by the actuator.

In case that the power transfer system is not being used, e.g. when the vehicle is running, the first secondary core portion 720 may be retracted into a position extending in the horizontal direction according to a rotation of the hinge driven by the actuator.

When the electric vehicle is to be charged, the hinge may be rotated by the actuator so that the first secondary core portion 720 may be expanded into a position extending in the vertical direction. At this time, the first secondary core portion 720 may be aligned to the first primary core portion 620 of the power transmission pad device of the EVSE such that the air gaps between the primary core and the secondary core are reduced.

Although the UI-type core structure of FIG. 11 is shown in FIG. 23, it will be apparent to those skilled in the art that the core according to the embodiment of FIG. 12 may be modified and mounted on the electric vehicle similarly to the embodiments of FIGS. 23 and 22.

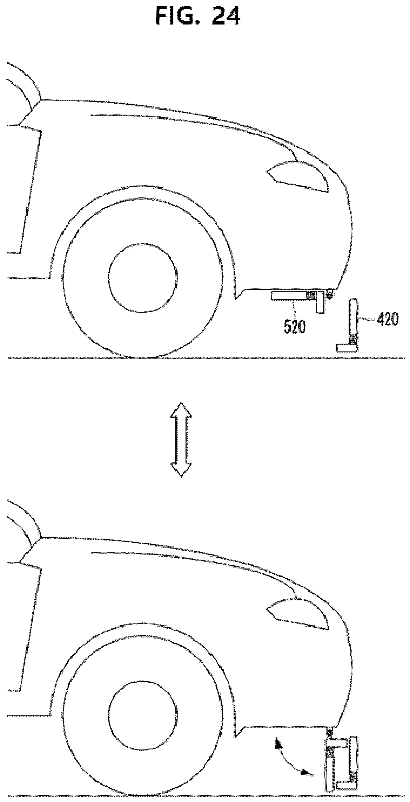

FIG. 24 is a conceptual diagram of an embodiment of the power transfer system shown in FIG. 21 installed outside a front portion of an electric vehicle.

The configuration of the embodiment shown in FIG. 24 is similar to that shown in FIG. 22 except that the power transfer system is installed in the front portion of the vehicle, and thus duplicate description thereof will be omitted for simplicity.

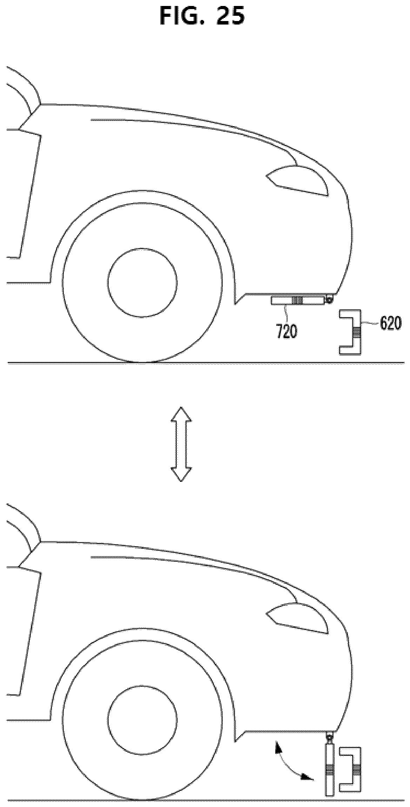

FIG. 25 is a conceptual diagram of an embodiment of the power transfer system in which the primary core and secondary core shown in FIG. 11 are arranged outside a front portion of an electric vehicle with an intervention of the driving unit 800 including the hinge that may be rotatable by the actuator.

The configuration of the embodiment shown in FIG. 25 is similar to that shown in FIG. 23 except that the power transfer system is installed in the front portion of the vehicle, and thus duplicate description thereof will be omitted for simplicity.

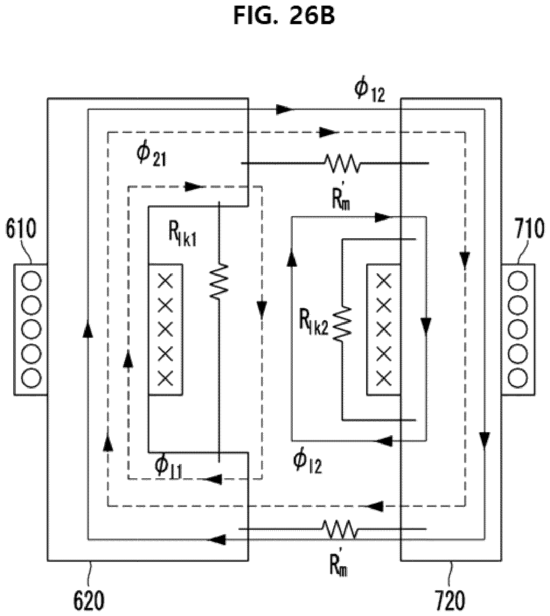

FIGS. 26A and 26B illustrate magnetic flux distributions in the power transfer systems shown in FIGS. 9 and 11, respectively, for analyses of magnetic circuits formed in the power transmission pad device and the power reception pad device.

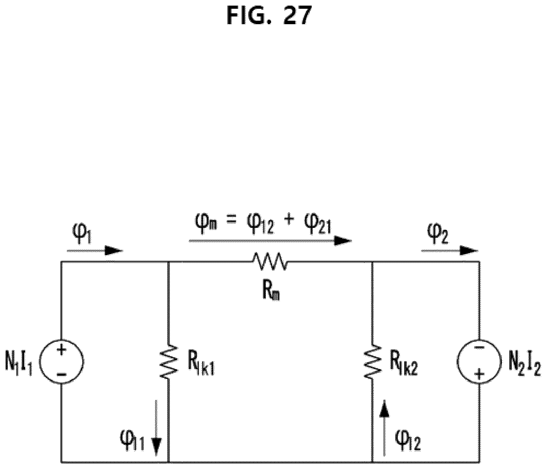

FIG. 27 is a circuit diagram of a magnetic equivalent circuit formed in the power transmission pad device and/or the power reception pad device shown in FIG. 26A and/or 26B.

Ampere's circuital law and Faraday's law may be used in the analysis of the magnetic circuits of FIGS. 26A and 26B.

In addition, as indicated in FIGS. 26A and 26B, a magnetic flux $\Phi_{21}$ arising from a current flowing in the primary coil and passing through the secondary coil and a magnetic flux $\Phi_{12}$ arising from a current flowing in the secondary coil and passing through the primary coil may be modeled independently. Since the magnetic flux density is affected by permeabilities of the magnetic cores and the air, a greater magnetic resistance may be formed by the air gap in the magnetic path than in the magnetic core in the path. Therefore, in the embodiments of FIGS. 26A and 26B, the magnetic resistance $R'_m$ caused by the air gap in the magnetic path may be a dominant component affecting the magnetic equivalent circuit of FIG. 27. At this time, a magnetomotive force may be expressed as the product of a number of turns (N) of the coil and the current (I).

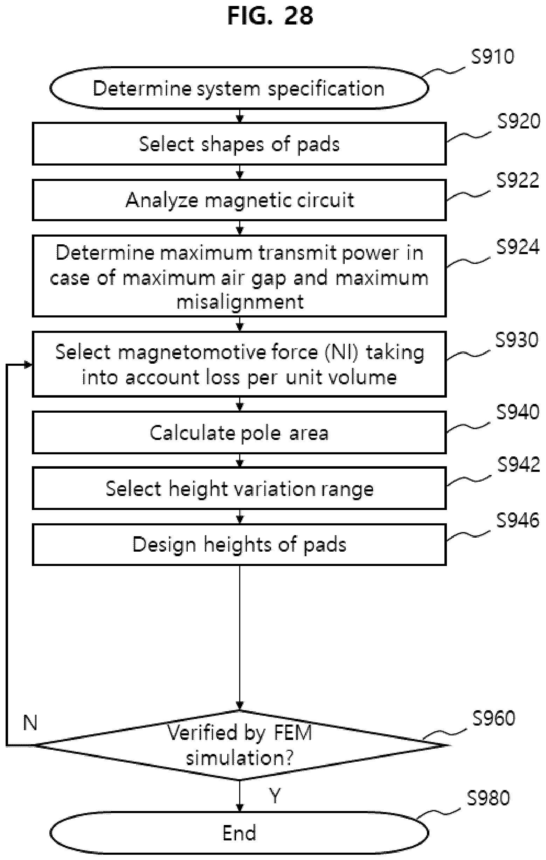

FIG. 28 is a flowchart showing a process of designing the transmission pad and the reception pad according to an exemplary embodiment in consideration of a maximum transmit power.

The process of designing the transmission pad and the reception pad shown in FIG. 28 may include operations of determining system specifications (S910), selecting shapes of vertical pads, e.g. selecting either the L-type or the UI-type core structure (S920), deriving a magnetic equivalent circuit by use of governing equations for inductive power transfer (IPT) and analyzing the magnetic circuit (S922), and designing the transmission pad and the reception pad to satisfy a target maximum transmit power.

The operation of designing the transmission pad and the reception pad to satisfy a target maximum transmit power may include an operation of designating structures of the transmission pad and the reception pad to satisfy the maximum transmit power which has been determined in case of a maximum air gap and a maximum misalignment (S924). The maximum transmit power may be derived using a result of the magnetic circuit analysis in the operation S922.

The operation of designing the transmission pad and the reception pad may further include an operation of selecting the magnetomotive force (NI) taking into account a loss per unit volume $P_v$ (S930). At this time, the loss per unit volume $P_v$ may be chosen as at least one value according to heat dissipation conditions of the core. For example, a value of 200 kW/$m^3$ may be chosen as the loss per unit volume $P_v$ for a case of a natural heat dissipation while another value of 500 kW/$m^3$ may be chosen as the loss per unit volume $P_v$ for a case of an active heat dissipation. Then, the magnetomotive force (NI) may be selected according to the loss per unit volume $P_v$.

The operation of designing the transmission pad and the reception pad may further include operations of calculating an area of poles (S940), selecting a range of height variation of the transmission pad and the reception pad (S942), and designing heights of the pads according to the height variation range (S946).

The operation of designing the transmission pad and the reception pad may further include an operation of verifying that a design result obtained in the operations S940 and S946 satisfies a requirement on the magnetic flux density reflecting the requirements on the maximum transmit power and the loss per unit volume by a finite element method (FEM) simulation (S960).

If the verification succeeds (S960), the process of designing the transmission pad and the reception pad is completed (S980). If the verification fails in the operation S960, however, the procedure returns to the operation S930 and the operations S930-S960 are carried out again. The embodiment of FIG. 28 may correspond to the process of designing the power transfer system according to the embodiment shown in FIG. 9 or FIG. 11.

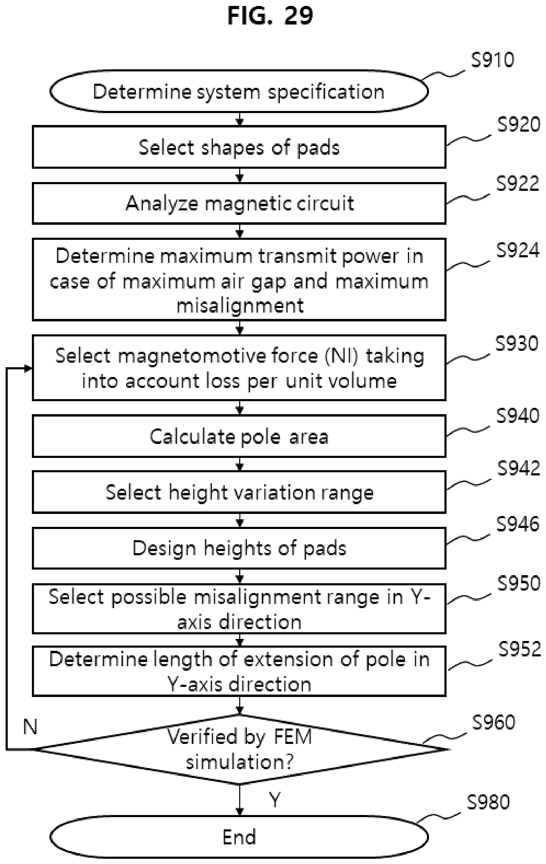

FIG. 29 is a flowchart showing a process of designing the transmission pad and the reception pad according to another exemplary embodiment in consideration of the maximum transmit power.

Duplicate descriptions of the operations shown in FIG. 29 that are the same as or very similar to corresponding operations in FIG. 28 will be omitted for simplicity.

The process of FIG. 29 may further include an operation of selecting a possible misalignment range in the Y-axis direction (S950) after the heights of the pads are designed in the operation S946. In addition, the process may further include an operation of determining the length of the extension of the pole in the Y-axis direction ($\Delta Y$) based on the possible misalignment range in the Y-axis direction (S952).

The embodiment of FIG. 29 may correspond to a process of designing the power transfer system according to the embodiments shown in FIGS. 10 and 12.

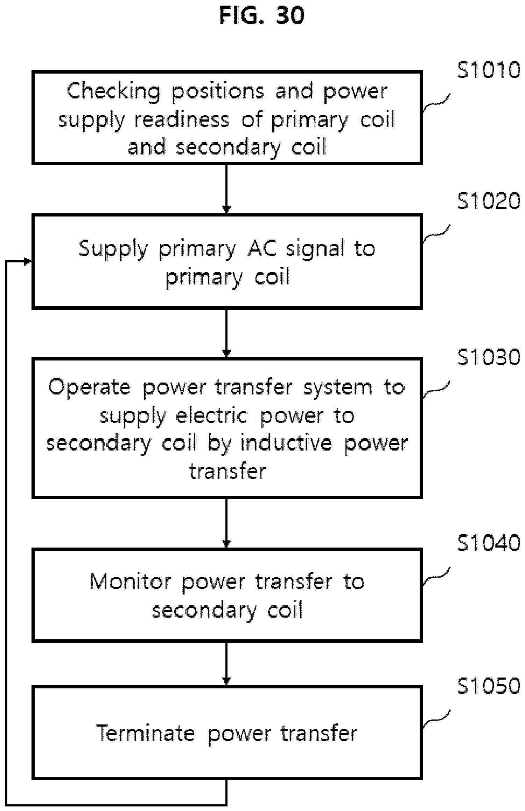

FIG. 30 is a flowchart showing a power transfer method operable in the power transfer system including the power transmission pad device and the power reception pad device according to an exemplary embodiment of the present disclosure.

The power transfer method shown in FIG. 30 may include operations of checking the positions and power supply readiness of the primary coil and the secondary coil (S 1010), supplying a primary alternating current (AC) signal to the primary coil (S 1020), operating the power transfer system to supply the electric power to the secondary coil by the inductive power transfer between the coils (S 1030), monitoring the power transfer to the secondary coil (S 1040), and terminating the power transfer if a charging target is reached or an error occurs during the power transfer (S1050).

According to exemplary embodiments of the present disclosure described above with reference to FIGS. 1-30, the wireless power transmission pad and the wireless power reception pad exhibit robustness to variations in the height in the Z-axis of the electric vehicle compared with existing planar wireless charging pads.

According to exemplary embodiments of the present disclosure, provided is a structure of mounting the vertical pad in the electric vehicle, which may enhance the convenience in charging the electric vehicle using the vertical pad structure.

According to exemplary embodiments of the present disclosure, the vertical pad structure may be mounted on the electric vehicle with the intervention of the driving unit including a hinge that may be rotatable manually or automatically. As a result, it is possible to reduce the gap between the transmission pad and the reception pad when the reception pad is expanded for the power transfer operation. In addition, an efficiency of the power transfer and the power density may be improved.

Meanwhile, the power transmission pad and the power reception pad of an asymmetric structure shown in FIGS. 11 and 12, for example, may minimize variations of circuit parameters caused by the misalignment and may simplify a compensation circuit needed for reducing the variations of the circuit parameters.

Also, the power transmission pad and the power reception pad of a point-symmetric structure shown in FIGS. 9 and 10, for example, may minimize variations of circuit parameters caused by the misalignment and may simplify a compensation circuit needed for reducing the variations of the circuit parameters as well.

In addition, the process and method of designing the power transmission pad and the power reception pad based on the magnetic circuit analysis according to exemplary embodiments of the present disclosure enables to optimize the volume, the weight, and the area of the power transmission pad and the power reception pad.

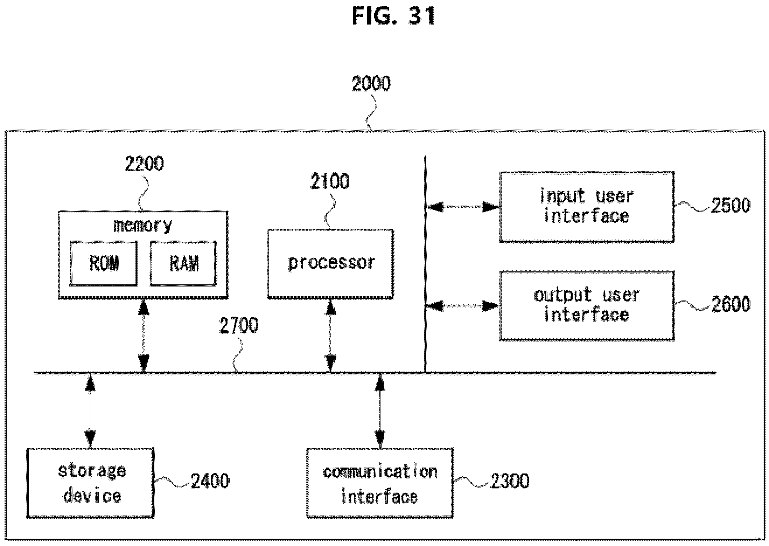

FIG. 31 is a block diagram showing a generalized configuration of the wireless power transmission pad device, the wireless power reception pad device, the wireless power transfer (WPT) system, or a computing system for controlling them according to an embodiment of the present disclosure.

Although not illustrated in FIGS. 1-30, a processor and a memory may be electrically connected to each component, so that the operation of each component may be controlled or managed by the processor.

At least some of the processes for the method of operating the power transfer system robust to variations in the alignment according to an embodiment of the present disclosure may be performed by the computing system 2000 of FIG. 31.

Referring to FIG. 31, the computing system 2000 according to an embodiment of the present disclosure may include a processor 2100, a memory 2200, a communication interface 2300, a storage device 2400, an input interface 2500, and an output interface 2600, and a system bus 2700.

The computing system 2000 according to an embodiment of the present disclosure may include at least one processor 2100 and the memory 2200 storing program instructions instructing the at least one processor 2100 to perform at least one process step. At least some of the operations or process steps of the method according to an embodiment of the present disclosure may be performed by the at least one processor 2100 loading and executing the program instructions from the memory 2200.

The processor 2100, which executes the program instructions or commands stored in the memory 1200, may include a central processing unit (CPU) or a graphics processing unit (GPU) or may be implemented by another kind of dedicated processor suitable for performing the method of the present disclosure.

Each of the memory 2200 and the storage device 2400 may include at least one of a volatile storage medium and a non-volatile storage medium. For example, the memory 2200 may be comprised of at least one of a read only memory (ROM) and a random access memory (RAM).

Additionally, the computing system 2000 may include the communication interface 2300 that performs communications through a wireless communication network.

Additionally, the computing system 2000 may further include the storage device 2400, the input interface 2500, and the output interface 2600.

The components of the computing system 2000 may be connected to each other by the system bus 2700 to communicate with each other.

A device including the processor 2100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A power reception device disposed in an electric vehicle to receive electric power from an electric vehicle supply equipment (EVSE), the power reception device comprising:

   a first magnetic core section being a part of a magnetic core device, elongated in a first axis direction, and corresponding to a core of a primary coil in a power transmission device of the EVSE;
   a secondary coil wound around the first magnetic core section; and
   a second magnetic core section being another part of the magnetic core device and extending from an end of the first magnetic core section.

2. The power reception device of claim 1, wherein the second magnetic core section is configured to extend toward the core of the primary coil in a state that the power reception device is aligned to the power transmission device to receive the electric power from the EVSE.

3. The power reception device of claim 1 or 2, wherein the second magnetic core section is configured to extend in a direction of a second axis perpendicular to the first axis.

4. The power reception device of anyone of claims 1-3, wherein a length of the second magnetic core section is determined based on a magnetic property of the second magnetic core section.

5. The power reception device of anyone of claims 1-4, wherein, when the magnetic core device is disposed at a particular position in the electric vehicle, the length of the second magnetic core section is determined based on an exterior shape of the electric vehicle at the particular position of the electric vehicle.

6. The power reception device of claim 3 or of anyone of claims 4-5 provided that in combination with claim 3, further comprising:
   a third magnetic core section being another part of the magnetic core device, coupled to a second end of the second magnetic core section having a first end coupled to the first magnetic core section, and elongated in a direction of a third axis perpendicular to the first axis and the second axis.

7. The power reception device of anyone of claims 1-6, wherein the first magnetic core section is elongated in the first axis direction, and the second magnetic core section is configured to extend in the first axis direction such that the magnetic core device is longer than a portion of the core of the primary coil corresponding to the first magnetic core section in a state that the power reception device is aligned to the power transmission device to receive the electric power from the EVSE.

8. An electric vehicle comprising the power reception device of anyone of claims 1-7.

9. A power transmission device disposed in an electric vehicle supply equipment (EVSE) capable of supplying electric power to an electric vehicle, the power transmission device comprising:

   a first magnetic core section being a part of a magnetic core device, elongated in a first axis direction, and corresponding to a core of a secondary coil in a power reception device of the electric vehicle;

a primary coil wound around the first magnetic core section; and
a second magnetic core section being another part of the magnetic core device and extending from at least one end of the first magnetic core section.

10. The power transmission device of claim 9, wherein the second magnetic core section is configured to extend toward the core of the secondary coil in a state that the power transmission is aligned with the power reception device to supply the electric power to the electric vehicle.

11. The power transmission device of claim 9 or 10, wherein the second magnetic core section is configured to extend in a direction of a second axis perpendicular to the first axis.

12. The power transmission device of anyone of claims 9-11, wherein a length of the second magnetic core section is determined based on a magnetic property of the second magnetic core section.

13. The power transmission device of claim 11 or of claim 12 provided that in combination with claim 11, further comprising:

a third magnetic core section being another part of the magnetic core device, coupled to a second end of the second magnetic core section having a first end coupled to the first magnetic core section,
and elongated in a direction of a third axis perpendicular to the first axis and the second axis.

14. The power transmission device of anyone of claims 9-13, wherein the second magnetic core section is provided at both ends of the first magnetic core section.

15. The power transmission device of anyone of claims 9-14, wherein the first magnetic core section is elongated in the first axis direction, and the first core section has a length in the first axis direction that is smaller than a length of the core of the secondary coil corresponding to the first magnetic core section in a state that the power transmission device is aligned with the power reception device to supply the electric power to the electric vehicle.

# FIG. 1

J1772 EVSE

Utility Mains

Enable/Inhibit

Base ← → Vehicle

Utility Mains

11 Wireless Charger Power Converter & Control

$C_1$

12 $L_{11}$

Transmit

$R_1$

21 $L_{22}$

Capture

$C_2$

$R_2$

Rectifier & Power Conversion

22 OBC On-Board Charger + Energy M'gmt Strategy + CAN messaging

OBC ac port

OBC WPT dc port

Vehicle dc-dc Converter

12V Batt

+ HV Batt −

13 Base Regulation Control & Communications

SAE J2931/1
SAE J2836/6
IEEE 802.11p
part 1609.2

23 Regulation Control & Communications

OBC CAN Interface to DSRC

CAN Msg

Battery Management System (BMS)

HMI/GUI System Status Alignment

Smart Grid Interoperability ← → J2954 Std

J2954 Std ← → Vehicle power and communications interface

EP 4 606 630 A1

**FIG. 2**

**FIG. 3**

**FIG. 4**

FIG. 5

EP 4 606 630 A1

## FIG. 6

## FIG. 7

# FIG. 8

**FIG. 9**

**FIG. 10**

## FIG. 11

## FIG. 12

# FIG. 13

$\Delta Z$

$I_m$

$I_g$

**FIG. 14**

## FIG. 15

## FIG. 16

# FIG. 17

# FIG. 18

EP 4 606 630 A1

## FIG. 19

## FIG. 20

# FIG. 21

## FIG. 22

## FIG. 23

620    720

## FIG. 24

## FIG. 25

## FIG. 26A

## FIG. 26B

# FIG. 27

# FIG. 28

```
        ┌────────────────────────────────────┐
        │    Determine system specification   │──── S910
        └────────────────────────────────────┘
                         │
        ┌────────────────────────────────────┐
        │        Select shapes of pads        │──── S920
        └────────────────────────────────────┘
                         │
        ┌────────────────────────────────────┐
        │        Analyze magnetic circuit     │──── S922
        └────────────────────────────────────┘
                         │
        ┌────────────────────────────────────┐
        │ Determine maximum transmit power in │
        │ case of maximum air gap and maximum │──── S924
        │            misalignment             │
        └────────────────────────────────────┘
                         │
        ┌────────────────────────────────────┐
        │ Select magnetomotive force (NI)     │
        │ taking into account loss per unit   │──── S930
        │ volume                              │
        └────────────────────────────────────┘
                         │
        ┌────────────────────────────────────┐
        │         Calculate pole area         │──── S940
        └────────────────────────────────────┘
                         │
        ┌────────────────────────────────────┐
        │     Select height variation range   │──── S942
        └────────────────────────────────────┘
                         │
        ┌────────────────────────────────────┐
        │        Design heights of pads       │──── S946
        └────────────────────────────────────┘
                         │
         N              ╱╲
        ◀───────────◀ Verified by FEM ─── S960
                    ╲  simulation?  ╱
                         ╲╱
                         │ Y
        ┌────────────────────────────────────┐
        │                End                  │──── S980
        └────────────────────────────────────┘
```

# FIG. 29

```
Determine system specification                              S910

Select shapes of pads                                      S920

Analyze magnetic circuit                                   S922

Determine maximum transmit power in
case of maximum air gap and maximum                        S924
misalignment

Select magnetomotive force (NI) taking
into account loss per unit volume                          S930

Calculate pole area                                        S940

Select height variation range                              S942

Design heights of pads                                     S946

Select possible misalignment range in Y-
axis direction                                             S950

Determine length of extension of pole in
Y-axis direction                                           S952

Verified by FEM                                            S960
simulation?

End                                                        S980
```

N

Y

# FIG. 30

```
┌─────────────────────────────────┐
│  Checking positions and power   │  S1010
│ supply readiness of primary coil│
│      and secondary coil         │
└─────────────────────────────────┘
                 │
                 ▼
┌─────────────────────────────────┐
│   Supply primary AC signal to   │  S1020
│          primary coil           │
└─────────────────────────────────┘
                 │
                 ▼
┌─────────────────────────────────┐
│ Operate power transfer system to│  S1030
│    supply electric power to     │
│ secondary coil by inductive power│
│           transfer              │
└─────────────────────────────────┘
                 │
                 ▼
┌─────────────────────────────────┐
│    Monitor power transfer to    │  S1040
│         secondary coil          │
└─────────────────────────────────┘
                 │
                 ▼
┌─────────────────────────────────┐
│    Terminate power transfer     │  S1050
└─────────────────────────────────┘
```

**FIG. 31**

## EUROPEAN SEARCH REPORT

**Application Number**

EP 24 21 9404

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/249480 A1 (PAPARO VINCENZO I [US] ET AL) 26 September 2013 (2013-09-26) * figures 1-14 * | 1-15 | INV. B60L53/12 H01F38/14 H02J50/10 |
| X | US 5 907 231 A (WATANABE KUNIHIKO [JP] ET AL) 25 May 1999 (1999-05-25) * figures 1-14 * | 1-15 | |
| X | CN 107 640 047 B (UNIV CHONGQING) 11 February 2020 (2020-02-11) * figures 1-8 * | 1-8, 10-15 | |
| X | CN 115 691 989 A (HUAWEI DIGITAL POWER TECH CO LTD) 3 February 2023 (2023-02-03) * figures 8-18 * | 9-15 | |
| A | | 1-8 | |

**TECHNICAL FIELDS SEARCHED (IPC)**

B60L
H02J
H01F

The present search report has been drawn up for all claims

| Place of search | Date of completion of the search | Examiner |
|---|---|---|
| The Hague | 5 June 2025 | Gücin, Taha |

EPO FORM 1503 03.82 (P04C01)

**ANNEX TO THE EUROPEAN SEARCH REPORT**
**ON EUROPEAN PATENT APPLICATION NO.**                    EP 24 21 9404

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | | Publication date | Patent family member(s) | | Publication date |
|---|---|---|---|---|---|
| US 2013249480 | A1 | 26-09-2013 | US | 2011204845 A1 | 25-08-2011 |
|  |  |  | US | 2013249480 A1 | 26-09-2013 |
|  |  |  | WO | 2011106506 A2 | 01-09-2011 |
| US 5907231 | A | 25-05-1999 | CN | 1170986 A | 21-01-1998 |
|  |  |  | EP | 0817212 A1 | 07-01-1998 |
|  |  |  | EP | 1045406 A2 | 18-10-2000 |
|  |  |  | US | 5907231 A | 25-05-1999 |
| CN 107640047 | B | 11-02-2020 | NONE | | |
| CN 115691989 | A | 03-02-2023 | NONE | | |

EPO FORM P0459

For more details about this annex : see Official Journal of the European Patent Office, No. 12/82

**REFERENCES CITED IN THE DESCRIPTION**

**Patent documents cited in the description**

- KR 1020240025033